# EUROPEAN PATENT SPECIFICATION

(11) **EP 4 037 498 B1**
(45) Date of publication and mention of the grant of the patent: **22.04.2026**
(21) Application number: 20872629.9
(22) Date of filing: 30.09.2020
(51) Int. Cl.: A23B 7/148, B01D 53/04

(54) **FOOD PRESERVATION METHOD**
VERFAHREN ZUR KONSERVIERUNG VON LEBENSMITTELN
PROCÉDÉ DE CONSERVATION D'ALIMENTS

(30) Priority: 30.09.2019 US 201962907904 P
(43) Date of publication of application: 10.08.2022
(73) Proprietor: Greenlifetech Corporation, Banner Elk NC 28604 (US)
(72) Inventor: ROESNER, Bruce B., Banner Elk, NC 28604 (US); FREUND, John, Carlsbad, California 92009 (US)
(74) Representative: Fish & Richardson P.C.
(86) International application number: PCT/US2020/053592
(87) International publication number: WO 2021/067470

(56) References cited:
- CN-A- 101 322 575
- JP-A- 2015 054 315
- JP-A- H08 294 322
- US-A1- 2014 065 274
- US-A1- 2018 245 835
- US-A1- 2018 245 835
- US-B1- 6 230 614

## Description

### TECHNICAL FIELD

This invention relates to food preservation.

### BACKGROUND

Today there are literally hundreds of patents describing various method or techniques for extending the life of foods and drinks. These patents typically describe three basis techniques or combinations thereof. The intent of just about all of these devices is to reduce the amount of oxygen which makes up 21% of air to which the consumable is exposed. Of course, reducing the temperature, as in refrigeration, slows down the process of bacteria growth and extends the life span of food and drinks, but is not considered is this analysis.

The first technique involves creating a vacuum. In reality, only various degrees of a partial vacuum are created. As the vacuum level is increased (lower pressure), the amount of oxygen available to react with the food or wine is decreased and the life of the material is increased. The challenges associated with this approach are that vacuum systems are expensive, containers to sustain low pressures are expensive, and only a portion of the oxygen is removed providing limited benefits. Even with a high-level vacuum capable of reducing the pressure to 0.345 bar (5 psi) absolute (approximately one-third of atmospheric pressure), only two-thirds of the oxygen has been removed. In other words, one-third of the oxygen remains.

The second technique, and by far the most popular, is to replace air (21% oxygen) with an inert gas such as nitrogen or argon. The concept around this approach is quite simple. By replacing the air (oxygen) with these inert gases, the amount of oxidation and deterioration of the consumable, is reduced. This technique is used worldwide and does indeed result in the enhanced shelf life of food and wine. Systems that significantly reduce the level of oxygen (0.1 to 1 %) have extended the shelf life of wines indefinitely while food has been extended by months. However, there are many issues associated with the technique. The use of inert gas has been found to be a cost-effective means of preserving consumables on a large-scale basis, but most homes and facilities do not have easy access to these types of gases. While there are dedicated businesses already established that bottle and distribute these gases to major consumers of the gases, this method does not lend itself to the typical user because of gas delivery issues as well as the handling of the heavy high-pressure tanks in which the gases are maintained.

Finally the third approach uses chemicals to slow the deterioration of consumables. Needless to say, this is rather risky (possibility of chemicals entering the food chain) and quite costly. Consequently, the method is rarely used beyond well controlled preservatives in food and cosmetics.

JP H08 294322 A describes storage equipment capable of storing objects in an atmosphere at low oxygen concentrations at reduced labor and cost for maintenance and equipment cost. A storehouse stores objects and a housing vessel contains an oxygen scavenger. There is equipped a circulating channel so as to start from the inside of the storehouse via the housing vessel and then return to the inside of the storehouse again. The returning flow channel of the circulating channel is furnished with a mixing valve to mix the air with the gas in the channel. The gas in the channel is circulated by a fan. Besides, a sensor detects the oxygen concentration of the gas inside the storehouse. When the sensor detects the oxygen concentrations other than a specified value, a control unit drives the fan and also controls the mixing valve according to the value detected by the sensor.

US 2018/0245835 A1 describes a container refrigeration apparatus that includes: a casing which forms an external storage space communicating with the exterior of the container and an internal storage space communicating with the interior of the container; a refrigerant circuit; an external fan; an internal fan; and an inside air control system including an exhaust passage which allows a space on a blowout side of the internal fan in the internal storage space to communicate with the external storage space, and controls composition of the inside air in the container. An external end of the exhaust passage is open on a suction side of the external fan in the external storage space.

CN 101 322 575 A describes a preservation refrigerator and a matched oxygen concentration regulating device. The light oxygen reduction preservation refrigerator comprises a refrigerating chamber, an extraction port and an air injection port, the extraction port and the air injection port are communicated with the oxygen concentration regulating device by a corresponding extraction pipeline and an air injection pipeline, a main body of the device is an oxygen concentration regulator with the light response mode, the extraction pipeline is communicated with an air inlet of the oxygen concentration regulator, the air injection pipeline is communicated with an air outlet of the oxygen concentration regulator, electromagnetic valves are both connected on the extraction and the air injection pipelines in series, an air pump is connected on the pipeline of the extraction pipeline or the air injection pipeline within the electromagnetic valve in series, the oxygen concentration regulator, the electromagnetic valves and the air pump are connected with a control circuit. The mode utilizes the characteristics of oxygen absorption and oxygen release of the light response material under the radiation of the ultraviolet with the different wavelengths, the control is convenient, the regulation of the oxygen concentration and the oxygen reduction preservation refrigerator can be further realized by being matched with a simple control element.

### SUMMARY

The invention is defined by the appended claims.

According to the invention, a system for removing oxygen from a container includes a recirculation pump, an oxygen removal device, and a low pressure bleeder valve. The recirculation pump includes an intake and a discharge, and the intake includes a first connector fluidically connected to the container. The discharge is fluidically connected to an oxygen removal device. The oxygen removal device includes an inlet fluidically connected to the discharge of the recirculation pump, an outlet including a second connector fluidically connected to the container, and an oxygen removal portion configured to remove oxygen from fluid passing from the inlet to the outlet. The low pressure bleeder valve is fluidically connected to the inlet of the recirculation pump and configured to introduce additional fluid into the system in response to a pressure in the system being below a predetermined threshold.

According to the invention, a method for removing oxygen from a container includes drawing fluid from the container via a recirculation pump, passing the fluid through an oxygen removal device, wherein the fluid comes into contact with oxygen removal material, ORM, that scavenges oxygen from the fluid, resulting in an oxygen depleted fluid, returning the oxygen depleted fluid to the container, and, in response to a pressure in the container falling below a predetermined amount, introducing new fluid to the container.

The system described offers many advantages over previous systems. First, excellent preservation performance as measured in extended shelf life/low oxygen levels is achievable. The performance can be delivered all along the food chain from the farm, through distribution, retail and ultimately home or retail use. This capability can be highly valued in both established as well as emerging markets. Secondly, there are no burdensome gas tanks that continually need to be refilled and/or transported. Thirdly, the final oxygen content of the container can be controlled with no intervention and held to very low levels. Fourthly, the cost can be reasonable. Finally, utilizing oxygen absorbing materials that allows for the discharge of the oxygen back into the environment is politically, commercially and environmentally correct, and very advantageous from a marketing and operational perspective.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 is an example food preservation system.
FIG. 2 is an example of a food preservation system in accordance with the present invention.
FIG. 3 another example of a food preservation system

Like reference symbols in the various drawings indicate like elements.

### DETAILED DESCRIPTION

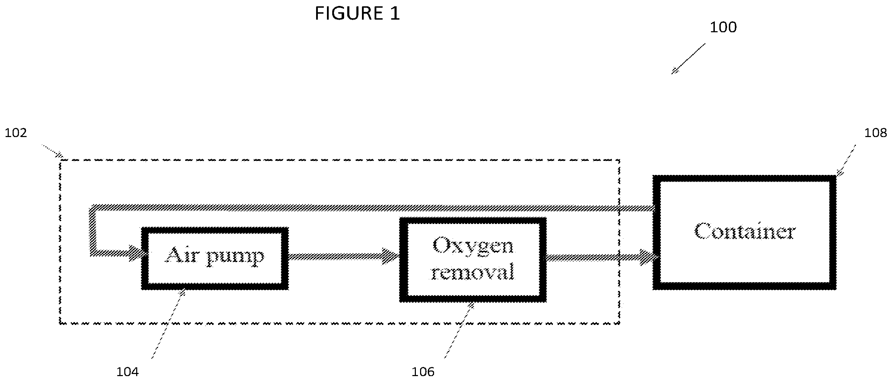

FIG. 1 illustrates an example food preservation system 100. The system 100 can generate a substantially inert gas environment. In these instances, the system 100 can slow the deterioration of the consumables that is not only cost effective but an efficient solution for oxygen removal from food and wine containers. The system 100 can be applied to any items (clothes) adversely affected by the presence of oxygen. A reduced oxygen environment can reduce mold, and its associated smell, and can reduce or eliminate insects from attacking the garment.

Currently, fruit frequently are placed in sealed containers just prior to being fruit ripened. In these instances, the fruit ripens using the trapped oxygen which is depleted, and the fruit then continues to be preserved for months, as long as the container is not opened thereby allowing oxygen to enter. The illustrated system 100 can store ripened fruit and then reduce or remove the oxygen slowing or preventing further ripening and spoilage.

As illustrated, the system 100 includes a circulating system 102 that extracts oxygen from air resulting in an inert gas or substantially inert gas in an atmospheric pressure environment. The circulating systems includes a circulating pump 104 that includes a canister 106 filled with oxygen reducing material (one time disposable or rechargeable multi use material) from which the oxygen reduced gas is pumped into the enclosed container 108 including, for example, food, bottled goods, clothes, or other items. The gas from the container 108 is then recirculated through the air pump 104 and the oxygen removal process is repeated for the specific container 108. The process can be repeated for other containers.

The system 100 can include an oxygen reducing material, other techniques not yet known could be developed in the future and subsequently applied to the proposed system 100. These might be vacuum-based or electric-field-based as examples.

The recirculation can provide multiple advantages. First, the oxygen removal in the container 108 will not be 100% efficient for any practical system. If only a portion of the oxygen is removed as it passes through the container 108, a lower limit of a final oxygen content in the container 108 can be set. As an example, 60% oxygen removal can result in 8% oxygen (40% of the original 20% oxygen content in air) remaining in the container 108. Even if the oxygen removal was 90%, the gas in the container 108 can still have 2% oxygen. But recycling the oxygen deprived gas exiting the container 108 can result in a continually reduced oxygen content. Table 1 is an example that demonstrates the residual oxygen after each cycle.

### Number of Cycles

| **% Oxygen Removal** | **1** | **2** | **3** | **4** | **5** |
|---|---|---|---|---|---|
| 40 | 12% | 7.20% | 4.32% | 2.59% | 1.56% |
| 50 | 10% | 5.00% | 2.50% | 1.25% | 0.63% |
| 60 | 8% | 3.20% | 1.28% | 0.51% | 0.20% |
| 70 | 6% | 1.80% | 0.54% | 0.16% | 0.05% |
| 80 | 4% | 0.80% | 0.16% | 0.03% | 0.01% |
| 90 | 2% | 0.20% | 0.02% | 0.00% | 0.00% |

Even with an oxygen absorption efficiency of only 70%, the oxygen content in the container can drop below 0.6% in, for example, 3 cycles and below 0.1% in, for example, 5 cycles.

The system 100 can be closed to more efficiently use the oxygen absorbing material. When recycling the gas through the canister 108, less oxygen is typically removed with each cycle. No matter how many times the cycle is performed, the amount of oxygen removed is from the original 20% of the container 108. That said, the container 108 may have insignificant leaks that contribute additional oxygen to the system 100. To be technically accurate, due to pressure equalization (final pressure of container to be approximately atmospheric), the amount of oxygen removed can equal to about 25% of the original volume of air.

The oxygen removal material (ORM) can be rechargeable. In some instances, the ORM can be treated with perhaps heat or UV so that the oxygen is released and then the ORM is reused to remove oxygen again. In these instances, the recharging can occur within the system 100.

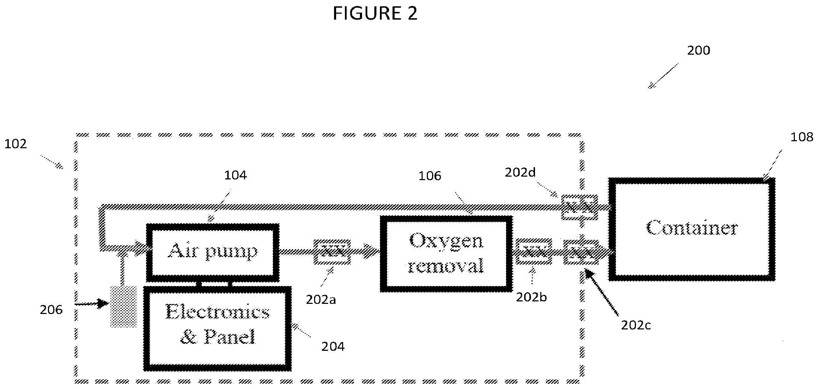

FIG. 2 is an example food preservation system 200 for automating the preservation method in accordance with the present invention. As illustrated, the system 200 includes locking snap connectors 202a-d on the input and output of the container 108. In these instances, the recycling unit 102 can be quickly connected and disconnected to the container 108. The system 200 includes electronics 204 to control the operation (On/Off, timing, etc.) of the pump 104. One-way valves can be used in place of ON/OFF valves or the snap connectors 202. As an example, a one-way valve can be used to allow air into the system 200 as the oxygen is removed. The cost of these items is typically less than $1. The current system 200 includes a low pressure bleeder valve 206.

Proper controls could be implemented in order to optimize performance of the system 200. As an example, the system 200 can be set to run for a given period of time. With different size containers, the operator can select a container size or simply allow the system 200 to run for extended periods of time (e.g., minutes, hours) to remove most or all the oxygen.

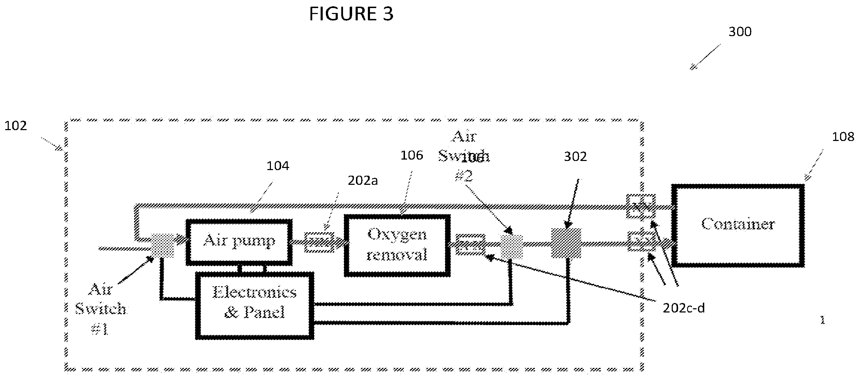

FIG. 3 illustrates an example preservation system 300. As illustrated, the system 300 includes an oxygen sensor, which then allows the controller to turn off the pump when the oxygen level falls below a certain level.

An indirect and more cost-effective means of monitoring the oxygen level could be through the use of a pressure sensor 302. As the oxygen level is reduced, the pressure inside the closed system/container will be reduced. Monitoring this pressure reduction, as well as the rate change in pressure, allows for an accurate determination of the oxygen content. This technique would circumvent having to know the container volume or the efficiency of the oxygen absorbing material, which could change with usage.

Table 2 is listed below and lists estimates for medium quantities, and based upon the assumption that the material used to extract oxygen from the air will be rechargeable (heat or light used to discharge the oxygen).

| **Items** | **Cost** | |
|---|---|---|
| Two lock connectors and stopper | $ | 2.00 |
| Two lock connectors | $ | 1.50 |
| Pump | $ | 6.00 |
| Filter housing | $ | 3.00 |
| Low pressure valve | $ | 0.75 |
| Tubing | $ | 0.50 |
| Housing | $ | 5.00 |
| Electronics/panel | $ | 4.00 |
| Oxygen absorbing material | $ | 6.00 |
| Assembly labor | $ | 2.50 |
| **Total** | $ | 31.25 |

Although the systems 100-300 has been described as standalone, it should be noted that this could be a subsystem included into other systems. As an example, today's refrigerators have enclosed storage containers to store vegetables, fruits, etc. The proposed systems 100-300 can be built into the refrigerator such that when the containers are opened and subsequently closed, the oxygen reduction recirculating system 102 would be activated either manually or by sensing the closure. As the refrigerator becomes more "intelligent", this subsystem can be built directly into and monitored by the refrigerator.

## Claims

1. A system (100, 200, 300) for removing oxygen from a container (108), the system comprising:
a recirculation pump (104) comprising an intake and a discharge, wherein the intake comprises a first connector fluidically connected to the container, and the discharge is fluidically connected to an oxygen removal device (106);
the oxygen removal device comprising:
an inlet fluidically connected to the discharge of the recirculation pump;
an outlet including a second connector fluidically connected to the container; and
an oxygen removal portion configured to remove oxygen from fluid passing from the inlet to the outlet; and
a low pressure bleeder valve (206) fluidically connected to the inlet of the recirculation pump, wherein the low pressure bleeder valve is configured to introduce additional fluid into the system in response to a pressure in the system being below a predetermined threshold.

2. The system (100, 200, 300) of claim 1, wherein the oxygen removal device further comprises:
an oxygen release system comprising:
a release path configured to permit fluid flow from the oxygen removal portion of the oxygen removal device out of the system; and
an energy source configured to impart energy on the oxygen removal portion of the oxygen removal device sufficient to cause the oxygen removal portion to release scavenged oxygen, and optionally wherein the energy source is ultraviolet light or heat or electric field or vacuum.

3. The system (100, 200, 300) of any one of claims 1 or 2, further comprising:
oxygen removal material, ORM, embedded in the oxygen removal device and along a flowpath from the inlet to the outlet, wherein the ORM absorbs oxygen on contact.

4. The system (100, 200, 300) of claim 1 or claim 3, wherein the first connector and second connector each comprise snap disconnects that prevent fluid flow when disconnected.

5. The system (100, 200, 300) of claim 1 or claim 3, further comprising:
a first valve connected between the first connector and the recirculation pump;
a second valve connected between the second connector and the oxygen removal device;
a pressure sensor configured to sense a pressure in the system and generate a sensed pressure signal; and
a controller configured to open and close the first and second valves, and activate the recirculation pump based on a pressure signal from the pressure sensor.

6. The system (100, 200, 300) of claim 1 or claim 3, wherein the system is integral to a containerized storage device, wherein the containerized storage device comprises one or more containers.

7. A method for removing oxygen from a container, the method comprising:
drawing fluid from the container via a recirculation pump;
passing the fluid through an oxygen removal device, wherein the fluid comes into contact with oxygen removal material, ORM, that scavenges oxygen from the fluid, resulting in an oxygen depleted fluid;
returning the oxygen depleted fluid to the container; and
in response to a pressure in the container falling below a predetermined amount, introducing new fluid to the container.

8. The method of claim 7, further comprising:
receiving an first pressure measurement associated with a pressure in the container;
determining a target pressure for the container associated with removing oxygen from the container;
opening one or more valves to allow fluid flow;
running the recirculation pump;
receiving a second pressure measurement associated with the pressure in the container;
in response to the second pressure measurement being equal to or less than the target pressure:
closing the one or more valves; and
stopping the recirculation pump.

9. The method of claim 7, further comprising:
determining a scavenging efficiency;
in response to the scavenging efficiency being below a predetermined threshold:
opening one or more valves to permit fluid flow from the ORM to an external area; and
exposing the ORM to an energy sufficient to cause the ORM to release scavenged oxygen, and optionally wherein the energy is ultraviolet light or heat.

10. The method of claim 7, further comprising controlling a humidity within the container.

11. The method of claim 7, wherein the container is one of one or more containers that form a containerized storage device.

## Patentansprüche

1. System (100, 200, 300) zum Entfernen von Sauerstoff aus einem Behälter (108), wobei das System Folgendes umfasst:
eine Umwälzpumpe (104), die einen Einlass und einen Auslass umfasst, wobei der Einlass einen ersten Verbinder umfasst, der fluidisch mit dem Behälter verbunden ist, und der Auslass fluidisch mit einer Sauerstoffentfernungsvorrichtung (106) verbunden ist;
wobei die Sauerstoffentfernungsvorrichtung Folgendes umfasst:
einen Eingang, der fluidisch mit dem Auslass der Umwälzpumpe verbunden ist;
einen Ausgang, der einen zweiten Verbinder umfasst, der fluidisch mit dem Behälter verbunden ist; und
einen Sauerstoffentfernungsabschnitt, der dazu ausgelegt ist, Sauerstoff aus Fluid zu entfernen, das von dem Eingang zum Ausgang strömt; und
ein Niederdruckentlüftungsventil (206), das fluidisch mit dem Eingang der Umwälzpumpe verbunden ist, wobei das Niederdruckentlüftungsventil dazu ausgelegt ist, als Reaktion darauf, dass ein Druck in dem System unter einem vorbestimmten Schwellenwert liegt, zusätzliches Fluid in das System einzubringen.

2. System (100, 200, 300) nach Anspruch 1, wobei die Sauerstoffentfernungsvorrichtung ferner Folgendes umfasst:
ein Sauerstofffreisetzungssystem, das Folgendes umfasst:
einen Freisetzungspfad, der dazu ausgelegt ist, einen Fluidstrom von dem Sauerstoffentfernungsabschnitt der Sauerstoffentfernungsvorrichtung aus dem System heraus zu ermöglichen; und
eine Energiequelle, die dazu ausgelegt ist, dem Sauerstoffentfernungsabschnitt der Sauerstoffentfernungsvorrichtung Energie zuzuführen, die ausreicht, um zu bewirken, dass der Sauerstoffentfernungsabschnitt abgefangenen Sauerstoff freisetzt, und wobei optional die Energiequelle ultraviolettes Licht oder Wärme oder ein elektrisches Feld oder Vakuum ist.

3. System (100, 200, 300) nach einem der Ansprüche 1 oder 2, ferner umfassend:
Sauerstoffentfernungsmaterial, ORM, das in die Sauerstoffentfernungsvorrichtung und entlang eines Strömungswegs von dem Eingang zum Ausgang eingebettet ist, wobei das ORM bei Kontakt Sauerstoff absorbiert.

4. System (100, 200, 300) nach Anspruch 1 oder Anspruch 3, wobei der erste Verbinder und der zweite Verbinder jeweils Schnapptrennungen umfassen, die bei Trennung einen Fluidstrom verhindern.

5. System (100, 200, 300) nach Anspruch 1 oder Anspruch 3, ferner umfassend:
ein erstes Ventil, das zwischen dem ersten Verbinder und der Umwälzpumpe verbunden ist;
ein zweites Ventil, das zwischen dem zweiten Verbinder und der Sauerstoffentfernungsvorrichtung verbunden ist;
einen Drucksensor, der dazu ausgelegt ist, einen Druck in dem System zu erfassen und ein erfasstes Drucksignal zu erzeugen; und
eine Steuerung, die dazu ausgelegt ist, das erste und das zweite Ventil zu öffnen und zu schließen und die Umwälzpumpe basierend auf einem Drucksignal von dem Drucksensor zu aktivieren.

6. System (100, 200, 300) nach Anspruch 1 oder Anspruch 3, wobei das System integral mit einer Behälterlagervorrichtung ist, wobei die Behälterlagervorrichtung einen oder mehrere Behälter umfasst.

7. Verfahren zum Entfernen von Sauerstoff aus einem Behälter, wobei das Verfahren Folgendes umfasst:
Saugen von Flüssigkeit aus dem Behälter über eine Umwälzpumpe;
Leiten des Fluids durch eine Sauerstoffentfernungsvorrichtung, wobei das Fluid mit Sauerstoffentfernungsmaterial, ORM, in Kontakt kommt, das Sauerstoff aus dem Fluid abfängt, was zu einem sauerstoffarmen Fluid führt;
Rückführen des sauerstoffarmen Fluids zu dem Behälter; und
als Reaktion darauf, dass ein Druck in dem Behälter unter einen vorbestimmten Betrag fällt, Einbringen von neuem Fluid in den Behälter.

8. Verfahren nach Anspruch 7, ferner umfassend:
Empfangen einer ersten Druckmessung, die mit einem Druck in dem Behälter assoziiert ist;
Bestimmen eines Zieldrucks für den Behälter, der mit einem Entfernen von Sauerstoff aus dem Behälter assoziiert ist;
Öffnen eines oder mehrerer Ventile, um einen Fluidstrom zu ermöglichen;
Betreiben der Umwälzpumpe;
Empfangen einer zweiten Druckmessung, die mit dem Druck in dem Behälter assoziiert ist;
als Reaktion darauf, dass die zweite Druckmessung gleich oder kleiner als der Zieldruck ist:
Schließen des einen oder der mehreren Ventile; und
Anhalten der Umwälzpumpe.

9. Verfahren nach Anspruch 7, ferner umfassend:
Bestimmen einer Abfangeffizienz;
als Reaktion darauf, dass die Abfangeffizienz unter einem vorbestimmten Schwellenwert liegt:
Öffnen eines oder mehrerer Ventile, um einen Fluidstrom von dem ORM zu einem externen Bereich zu ermöglichen; und
Aussetzen des ORM zu einer Energie, die ausreicht, um zu bewirken, dass das ORM abgefangenen Sauerstoff freisetzt, und wobei optional die Energie ultraviolettes Licht oder Wärme ist.

10. Verfahren nach Anspruch 7, ferner umfassend Steuern einer Feuchtigkeit innerhalb des Behälters.

11. Verfahren nach Anspruch 7, wobei der Behälter einer von einem oder mehreren Behältern ist, die eine Behälterlagervorrichtung bilden.

## Revendications

1. Système (100, 200, 300) pour éliminer de l'oxygène d'un contenant (108), le système comprenant :
une pompe de recirculation (104) comprenant une admission et un refoulement, dans lequel l'admission comprend un premier raccord raccordé fluidiquement au contenant, et le refoulement est raccordé fluidiquement à un dispositif d'élimination d'oxygène (106) ;
le dispositif d'élimination d'oxygène comprenant :
une entrée raccordée fluidiquement au refoulement de la pompe de recirculation ;
une sortie incluant un second raccord raccordé fluidiquement au contenant ; et
une partie d'élimination d'oxygène configurée pour éliminer de l'oxygène d'un fluide passant de l'entrée à la sortie ; et
une soupape de purge à basse pression (206) raccordée fluidiquement à l'entrée de la pompe de recirculation, dans lequel la soupape de purge à basse pression est configurée pour introduire un fluide supplémentaire dans le système en réponse au fait qu'une pression dans le système est inférieure à un seuil prédéterminé.

2. Système (100, 200, 300) de la revendication 1, dans lequel le dispositif d'élimination d'oxygène comprend en outre :
un système de libération d'oxygène comprenant :
un trajet de libération configuré pour permettre l'écoulement de fluide depuis la partie d'élimination d'oxygène du dispositif d'élimination d'oxygène hors du système ; et
une source d'énergie configurée pour fournir de l'énergie à la partie d'élimination d'oxygène du dispositif d'élimination d'oxygène, suffisante pour amener la partie d'élimination d'oxygène à libérer de l'oxygène récupéré, et facultativement dans lequel la source d'énergie est de la lumière ultraviolette ou de la chaleur ou un champ électrique ou du vide.

3. Système (100, 200, 300) de l'une quelconque des revendications 1 ou 2, comprenant en outre :
un matériau d'élimination d'oxygène, Oxygen Removal Material ORM, incorporé dans le dispositif d'élimination d'oxygène et le long d'un trajet d'écoulement depuis l'entrée jusqu'à la sortie, dans lequel l'ORM absorbe l'oxygène par contact.

4. Système (100, 200, 300) de la revendication 1 ou la revendication 3, dans lequel le premier raccord et le second raccord comprennent chacun des désassemblages par encliquetage qui empêchent l'écoulement de fluide lorsqu'ils sont désassemblés.

5. Système (100, 200, 300) de la revendication 1 ou de la revendication 3, comprenant en outre :
une première soupape raccordée entre le premier raccord et la pompe de recirculation ;
une seconde soupape raccordée entre le second raccord et le dispositif d'élimination d'oxygène ;
un capteur de pression configuré pour détecter une pression dans le système et générer un signal de pression détectée ; et
une unité de commande configurée pour ouvrir et fermer les première et seconde soupapes, et activer la pompe de recirculation sur la base d'un signal de pression provenant du capteur de pression.

6. Système (100, 200, 300) de la revendication 1 ou de la revendication 3, dans lequel le système fait partie intégrante d'un dispositif de stockage à contenant, dans lequel le dispositif de stockage à contenant comprend un ou plusieurs contenants.

7. Procédé pour éliminer de l'oxygène d'un contenant, le procédé comprenant :
l'aspiration d'un fluide, du contenant, par l'intermédiaire d'une pompe de recirculation ;
le passage du fluide à travers un dispositif d'élimination d'oxygène, dans lequel le fluide vient en contact avec un matériau d'élimination d'oxygène, Oxygen Removal Material ORM, qui récupère de l'oxygène du fluide, ayant pour résultat un fluide appauvri en oxygène ;
le retour du fluide appauvri en oxygène jusqu'au contenant ; et
en réponse au fait qu'une pression dans le contenant devient inférieure à une quantité prédéterminée, l'introduction d'un nouveau fluide dans le contenant.

8. Procédé de la revendication 7, comprenant en outre :
la réception d'une première mesure de pression associée à une pression dans le contenant ;
la détermination d'une pression cible pour le contenant associé l'élimination de l'oxygène du contenant ;
l'ouverture d'une ou de plusieurs soupapes pour permettre l'écoulement de fluide ;
la mise en fonctionnement de la pompe de recirculation ;
la réception d'une seconde mesure de pression associée à la pression dans le contenant ;
en réponse au fait que la seconde mesure de pression est égale ou inférieure la pression cible :
la fermeture de l'une ou des plusieurs soupapes ; et
l'arrêt de la pompe de recirculation.

9. Procédé de la revendication 7, comprenant en outre :
la détermination d'une efficacité de récupération ;
en réponse au fait que l'efficacité de récupération est inférieure à un seuil prédéterminé :
l'ouverture d'une ou de plusieurs soupapes pour permettre un écoulement de fluide depuis l'ORM jusqu'à une zone externe ; et
l'exposition de l'ORM à une énergie suffisante pour amener l'ORM à libérer de l'oxygène récupéré, et facultativement dans lequel l'énergie est de la lumière ultraviolette ou de la chaleur.

10. Procédé de la revendication 7, comprenant en outre la commande d'une humidité à l'intérieur du contenant.

11. Procédé de la revendication 7, dans lequel le contenant est un d'un ou de plusieurs contenants qui forment un dispositif de stockage à contenant.
